Europäisches Patentamt

(19) European Patent Office

Office européen des brevets

(11) Publication number: **0 165 688**

**A1**

## (12) EUROPEAN PATENT APPLICATION

(21) Application number: **85303116.9**

(22) Date of filing: **02.05.85**

(51) Int. Cl.⁴: **G 02 B 21/20**

(30) Priority: **09.05.84 DE 3416997**

(43) Date of publication of application:
**27.12.85 Bulletin 85/52**

(84) Designated Contracting States:
**AT FR GB**

(71) Applicant: **C. Reichert Optische Werke AG**
**P.O. Box 95 Hernalser Hauptstrasse 219**
**A-1170 Vienna(AT)**

(72) Inventor: **Merstallinger, Kurt**
**Rembrandtstrasse 26**
**A-1170 Wien(AT)**

(74) Representative: **Coxon, Philip et al,**
**Eric Potter & Clarkson 14 Oxford Street**
**Nottingham NG1 5BP(GB)**

(54) Microscope.

(57) A microscope comprises an objective (10), microscope eyepieces (34) and a beam path (12, 14, 14a, 14b) for a beam extending from the objective (10) to each eyepiece (34). Beam dividing means (30) is disposed in the beam path (14) for dividing the beam. Reflecting means (16, 24, 26, 28) is disposed in the beam path (12) between the beam dividing means (30) and the objective (10) for reflecting the beam by an odd number of reflections. A pentaprism (32) without roof edges is disposed in the beam path (14a, 14b) between the beam dividing means (30) and each eyepiece (34). Each pentaprism (32) is adapted to reflect the beam into a respective one of said eyepieces (34).

## MICROSCOPE

This invention relates to a microscope, and in particular to a binocular microscope.

In conventional upright binocular microscopes, a deviating prism is generally located in the optical axis of the microscope objective. In this prism the light beam undergoes a double reflection from the deviating prism into an optical axis of a dividing prism disposed in the binocular tube. After it has been divided by the dividing prism, each partial beam from the dividing prism is directed into a respective eyepiece by means of a half-cube prism. In such a case the image is not tilted and therefore remains upright and is upset only by the single image formation stage.

Microscopes having image erection are similarly known. One example is the stereo-microscope described in German Offenlegungsschrift 2,502,209. However, in image-erecting microscopes the light path departs from the plane of symmetry of the microscope (see for example German Offenlegungsschrift 3,222,935), with the result that the optical system is difficult to adjust. Furthermore, it is difficult to change the binocular tube, and if a dividing prism for dividing the light path into an observation light path and a light path for recording purposes is provided, then it can also be difficult to change this prism.

It is a principal object of the invention to provide a microscope in which the image produced by the microscope appears upright and in which a beam path from a microscope objective through beam dividing means to microscope eyepieces can be arranged in the plane of symmetry of the microscope between the objective and the beam dividing means.

According to the present invention there is provided a microscope comprising an objective, microscope eyepieces, a beam path for a beam, extending from the objective to the eyepieces, beam dividing means disposed in the beam path for dividing the beam, reflecting means disposed in the beam path, adapted to reflect the beam by an odd number of reflections, and a pentaprism without roof edges disposed in the beam path between the beam dividing means and each eyepiece, each pentaprism being adapted to reflect the beam into a respective one of said eyepieces.

This arrangement permits the part of the beam path between the objective and the beam dividing means to be disposed entirely within the plane of symmetry of the microscope.

Preferably, the beam dividing means is a dividing prism.

Desirably the reflecting means may comprise at least one mirror of adjustable inclination and may be disposed in the beam path between the objective and the beam dividing means.

Thus the object of the invention can be simply achieved, with the following additional advantages. Binocular tubes which include means for adjusting the tube inclination can be easily interchanged because the binocular tube and microscope stand can readily be separated.

At least one optical element may be disposed in the beam path for dividing a beam in the beam path into an observation beam and a recording beam. The observation beam passes along the beam path to the eyepieces while the recording beam may pass along an additional beam path to a recording device such as a television camera. The optical element may comprise, for example, a dividing prism or a dividing mirror. The optical element may form part of the reflecting means.

The optical element may be disposed in the beam path between the microscope objective and the dividing prism for the binocular tube, and can easily be replaced, because there is space above and below the element so that it is accessible from both sides.

The optical element and/or the reflecting means may be disposed between an optical axis of the objective and an optical axis of the beam dividing means.

Further, there is no disturbing roof edge, as is the case for example in German Offenlegungsschrift 2,502,209, which results in the appearance of a black line in the field of observation when the aperture is stopped down as far as possible in order to increase the contrast. Moreover, in the absence of intermediate image formation, the optical quality of the image is also preserved.

Reference is now made to the accompanying drawings, in which:-

Figure 1 shows diagrammatically one embodiment of part of a microscope according to the invention showing a light path from a microscope to a binocular tube;

Figure 2 shows diagrammatically another embodiment of part of a microscope according to the invention showing a light path from a microscope to a binocular tube; and

Figure 3 shows diagrammatically a binocular tube of a microscope for use in both the embodiments shown in Figures 1 and 2.

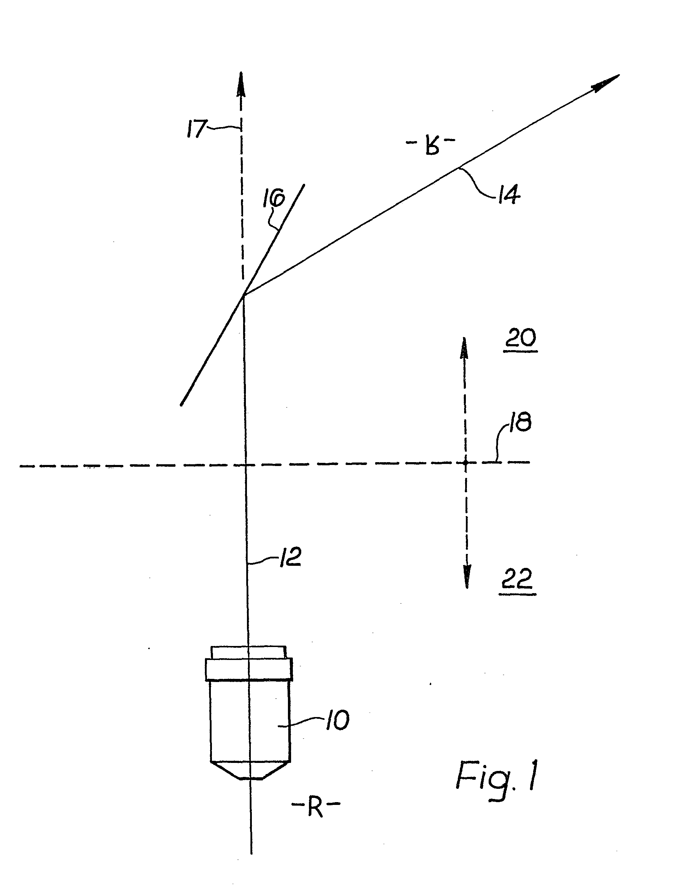

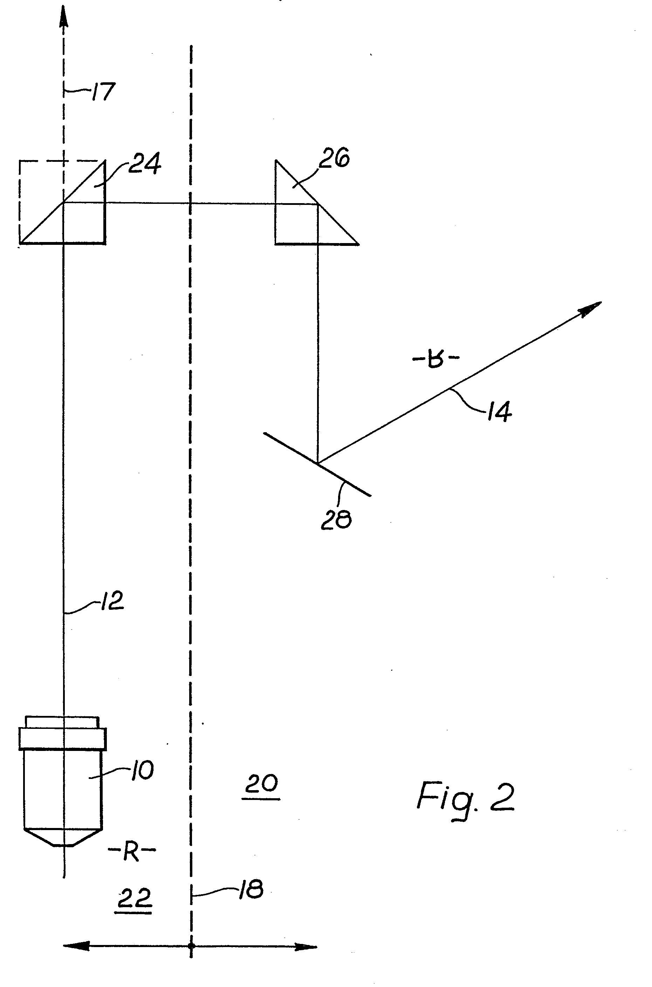

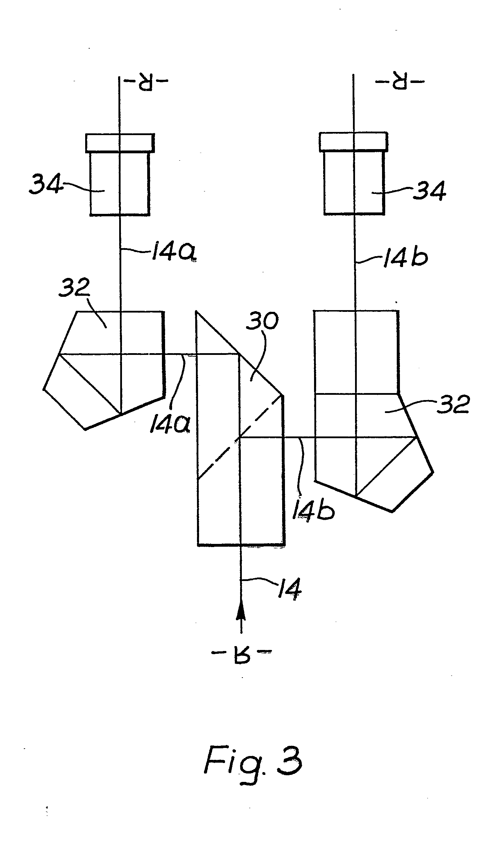

Figures 1 and 2 each show a microscope light path passing through a microscope objective 10 along an optical axis 12 of the objective and towards a dividing prism 30 (see Figure 3) of a binocular tube 20 along an optical axis 14 of the dividing prism 30.

In the case of the embodiment shown in Figure 1, reflecting means for effecting a single reflection is provided between the microscope objective 10 and the binocular tube 20. The reflecting means is a dividing mirror 16 which, in addition to reflecting the beam from the axis 12 into the axis 14, also allows part of the light to pass through along an additional light path 17 for recording purposes, such as for photography. The dividing mirror 16 is set at an inclination which can be adjusted together with that of the binocular tube 20, in which case the rate of change of inclination of the dividing mirror 16 would be half as great as that of the binocular tube 20. The principles of this type of arrangement are already known; such an arrangement is described in the specification for German Patent No. 31 17 254. The binocular tube 20 and the microscope stand 22 may optionally be separable along a surface 18.

In the embodiment shown in Figure 2, the reflecting means effects three reflections between the microscope objective 10 and the dividing prism 30 of the binocular tube 20. The incoming light from the microscope objective 10 is first reflected at a principal dividing prism 24 which, as in the case of the mirror 16 in Figure 1, splits the light beam between an observation light path and the additional light path 17 for recording. The observation light path extends from the dividing prism 24 to a half-cube prism 26 where the second reflection takes place. The third reflection takes place at a mirror 28 which, as with the mirror 16 in Figure 1, is similarly adjustable in inclination together with the binocular tube 20. In this embodiment the binocular tube 20 and the stand 22 may be separated along a vertical separation surface 18 which, as shown, extends between the two prisms 24 and 26.

The light path in the binocular tube 20 from the dividing prism 30 onwards is the same in each embodiment, and is shown in Figure 3. The light path from the objective extends co-linear with the axis 14 extends between the mirror 16 or 28 and the dividing prism 30. The light path includes a portion 14a extending between the dividing prism 30 and one eyepiece 34 of the binocular tube 20, and a portion 14b extending between the dividing prism 30 and another eyepiece 34 of the binocular tube 20. The dividing prism 30 divides a light beam passing along the axis 14 into two light beams, one of which passes along the portion 14a, and the other of which passes along the portion 14b. A pentaprism 32 without roof edges is located in each portion 14a and 14b between the dividing prism 30 and the eyepieces 34. The pentaprisms 32 deflect a light beam to the eyepiece 34. Only two reflections take place in the pentaprisms.

Image rotation or image tilting is illustrated by "R" in Figures 1, 2 and 3. The light path along the axes 12 and 14 between the objective 10 and the beam dividing means 30 lies in the plane of symmetry of the microscope. It can be seen that the image produced in the eyepieces 34 appears upright.

CLAIMS

1. A microscope characterised by an objective, microscope eyepieces, a beam path for a beam, extending from the objective to the eyepieces, beam dividing means disposed in the beam path for dividing the beam, reflecting means disposed in the beam path, adapted to reflect the beam by an odd number of reflections, and a pentaprism without roof edges disposed in the beam path between the beam dividing means and each eyepiece, each pentaprism being adapted to reflect the beam into a respective one of said eyepieces.

2. A microscope according to Claim 1 characterised in that the beam dividing means is a dividing prism.

3. A microscope according to Claim 1 or 2, characterised in that the reflecting means comprises at least one mirror of adjustable inclination disposed in the beam path between the objective and the beam dividing means.

4. A microscope according to Claim 1, 2 or 3, charaterised in that at least one optical element for dividing the beam is disposed in the beam path between the objective and the beam dividing means.

5. A microscope according to Claim 4, characterised in that the or each optical element is replaceable.

Fig. 1

0165688

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | CH-A- 560 908 (WILD HEERBRUGG AG)<br>* Column 4, lines 8-27; figures 1,5 * & DE - A - 2 502 209 (Cat. D) | 1 | G 02 B 21/20 |
| Y | US-A-4 412 727 (A. TAIRA)<br>* Column 2, lines 4-24; figures 1,2; claim 1 * | 1 | |
| A | | 2,3 | |
| A | DE-A-3 211 084 (OLYMPUS)<br>* Page 3, lines 10-21; page 6, lines 4-25; figures 1-3 * | 1,2,4 | |
| A | DE-A-3 230 504 (ERNST LEITZ WETZLER GmbH)<br>* Page 21, line 25 - page 23, line 25; figure 2 * | 3,4 | TECHNICAL FIELDS SEARCHED (Int. Cl.4)<br><br>G 02 B |

The present search report has been drawn up for all claims

| Place of search | Date of completion of the search | Examiner |
|---|---|---|
| THE HAGUE | 15-08-1985 | KEMSLEY E.E.K. |